# FASCICULE DE BREVET EUROPEEN

(11) **EP 2 664 415 B1**
(45) Date de publication et mention de la délivrance du brevet: **08.08.2018**
(21) Numéro de dépôt: 13166700.8
(22) Date de dépôt: 06.05.2013
(51) Int. Cl.: B24B 1/00, B24B 13/005, B24B 13/00

(54) **Procédé de façonnage d'un élément optique déformé élastiquement par une bague collée**
Bearbeitungsverfahren eines durch einen aufgeklebten Ring elastisch verformten optischen Elements
Method for forming an optical element elastically deformed by a bonded ring

(30) Priorité: 15.05.2012 FR 1254461
(43) Date de publication de la demande: 20.11.2013
(73) Titulaire: Thales SESO, 13090 Aix en Provence (FR)
(72) Inventeur: de Mollerat du Jeu, Christian, 13290 Les Milles (FR); Ferrari, Marc, 13004 Marseille (FR); Lemaitre, Gérard, 13100 Aix en Provence (FR); Hugot, Emmanuel, 13109 Simiane Collongue (FR)
(74) Mandataire: Gevers & Orès

(56) Documents cités:
- EP-A1- 2 144 093
- NELSON J E ET AL: "Stressed mirror polishing. 2: Fabrication of an off-axis section of a paraboloid", APPLIED OPTICS, OPTICAL SOCIETY OF AMERICA, WASHINGTON, DC; US, vol. 19, no. 14, 15 juillet 1980 (1980-07-15), pages 2341-2352, XP002552059, ISSN: 0003-6935, DOI: 10.1364/AO.19.002341
- SPORER S F: "TMT: Stressed Mirror Polishing fixture study", PROCEEDINGS OF SPIE - INTERNATIONAL SOCIETY FOR OPTICAL ENGINEERING, S P I E - INTERNATIONAL SOCIETY FOR OPTICAL ENGINEERING, US, vol. 6267, 14 juin 2006 (2006-06-14), pages 62672R-1, XP008102616, ISSN: 0277-786X, DOI: 10.1117/12.693114 [extrait le 2006-06-26]

## Description

L'invention porte sur un procédé de façonnage d'un élément optique asphérique, tel qu'une lentille ou un miroir.

Façonner des éléments optiques non seulement asphériques mais aussi de grande dimension est long, difficile et onéreux à cause des exigences de précision et de rugosité de surface. Une méthode de réalisation particulièrement avantageuse est le procédé de polissage sous contrainte (plus connue sous le terme anglais *stressed mirror polishing* ou SMP). Il est détaillé dans les « articles suivants :
- « Stressed mirror polishing. 1: A technique for producing non axisymmetric mirrors », Jacob Lubliner and Jerry E. Nelson Applied Optics, Vol. 19, Issue 14, pp. 2332-2340 (1980)
- « Stressed mirror polishing. 2: Fabrication of an off-axis section of a paraboloid », Jacob Lubliner and Jerry E. Nelson Applied Optics, Vol. 19, Issue 14, pp. 2341-2352 (1980)

Le principe général consiste à usiner une surface sphérique sur une ébauche contrainte de sorte que l'on obtienne une surface asphérique une fois que la contrainte est relâchée. Le but recherché est d'obtenir une surface optique asphérique tout en façonnant une surface sphérique, parce que les outils utilisés pour réaliser cette dernière sont très performants, en particulier pour réaliser des objets de grande dimension. C'est ainsi que la particularité du polissage sous contrainte est la mise en oeuvre de cette contrainte.

Pour la mise en oeuvre du procédé, une ébauche adaptée présente une forme généralement en plaque, c'est-à-dire avec une dimension significativement inférieure (d'un ordre de grandeur ou plus) aux deux autres. Typiquement, l'ébauche peut avoir une épaisseur de l'ordre de 10-100 mm, par exemple de 50 mm, et un diamètre de l'ordre de 1000 - 2000 mm, voire davantage. Ainsi, cette plaque possède deux faces, que l'on désigne par surfaces principales, et une surface latérale.

Une des deux surfaces principales est la « surface optique » qui doit être façonnée. De préférence, à l'origine, elle a une forme sphérique ou planaire. Le terme d'ébauche désigne donc ici l'élément optique dans son état avant le façonnage sous contrainte.

L'autre surface principale de l'ébauche est la surface arrière à la surface optique.

Conformément à la technique SMP conventionnelle, des bras orientés radialement peuvent être fixés, par exemple par collage, à la surface latérale de l'ébauche. Dans les articles précités de J. Lubliner et al. il est démontré qu'une déformation adaptée au but recherché peut être obtenue en appliquant auxdits bras uniquement des forces de cisaillement orientées parallèlement à la surface.

Comme expliqué plus haut, les efforts appliqués à l'ébauche sont choisis de manière à donner à la surface optique une sphéricité complémentaire à celle souhaitée. La déformée (écart par rapport à une forme sphérique) peut atteindre des valeurs de plusieurs centaines de micromètres ; et être contrôlée précisément par mesure interférométrique sur la face optique elle-même ou sur la face arrière de l'ébauche.

Ensuite, un procédé de façonnage par abrasion est mis en oeuvre, pour rendre planaire ou sphérique la surface déformée. Enfin, le relâchement des contraintes provoque la relaxation de l'ébauche, et la surface façonnée prend la forme asphérique souhaitée.

Ce procédé souffre d'imperfections. Les forces et moments sont appliqués par des bras ce qui engendre l'inhomogénéité des contraintes à la périphérie de l'ébauche. En effet, sur son périmètre extérieur, la contrainte fluctue entre des maxima locaux au pied de chaque bras et des minima locaux entre chaque bras. Il en résulte, après façonnage, une dentelure, c'est-à-dire une modulation géométrique indésirable de la surface optique ayant la périodicité des bras.

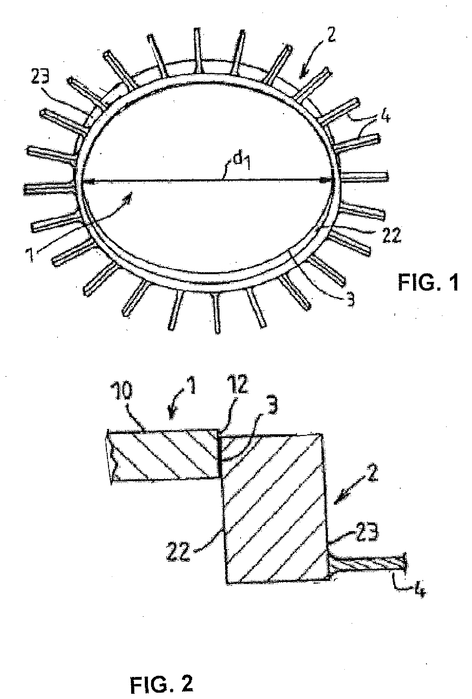

Le procédé décrit dans le brevet EP 2144093 remédie à cet effet parasite en fixant une ébauche d'élément optique, présentant une surface optique destinée à être façonnée, à une bague. Les figures 1 et 2 illustrent cette fixation de l'élément optique 1 sur la bague 2. La figure 1 montre en particulier une bague 2 de diamètre d1 qui entoure un élément optique 1, et qui est entourée par une multitude de bras 4. Ce sont ces bras qui appliquent la contrainte à la bague, qui elle-même contraint et déforme l'élément optique 1. Les efforts sont donc appliqués par des bras au périmètre 23 de la bague 2 pour la déformer de manière contrôlée, et déformer également de manière contrôlée l'élément optique 1 qui est fixé dessus, et donc sa surface optique 10. Cette bague répartit de manière homogène les contraintes dans la pièce optique et permet d'éviter la génération de défauts de hautes fréquences spatiales. Finalement, la dernière étape du procédé consiste à extraire l'ébauche 1 de la bague 2, de manière à relâcher les contraintes déformant ladite surface optique façonnée par abrasion pour permettre à cette dernière d'acquérir la forme asphérique souhaitée.

La figure 2 montre plus précisément la méthode connue de fixation de l'élément optique 1 à la bague 2. Elle consiste à :
- insérer l'élément optique 1 à l'intérieur de la bague 2 : la surface extérieure 12 de l'élément optique est en regard avec la surface intérieure 22 de la bague ;
- utiliser une couche de colle 3 pour fixer l'élément optique à la bague avant l'application des contraintes.

Cette méthode présente les inconvénients de :
- exiger une conformité stricte entre la taille de la bague et celle de l'ébauche ;
- mettre en oeuvre des contraintes élevées dans la couche de colle ;
- générer un encombrement important autour de l'ensemble équipé de par la présence des bras.

L'invention décrite dans la présente demande de brevet vise à perfectionner le procédé de fabrication de la demande de brevet précité EP 2144093, et qui est rappelé ci-dessus. Plus particulièrement,
- un des buts de l'invention est de pouvoir utiliser la même bague pour des ébauches de diamètres différents ;
- un autre but de l'invention est de réduire l'encombrement de l'ensemble composé par la bague et les bras qui appliquent la contrainte qui permet la déformation ;
- un autre but de l'invention est de relâcher les tolérances de fabrication portant sur la conformité des formes de la bague et de l'ébauche ;
- un autre but de l'invention est de diminuer les contraintes subies par la colle ;
- un autre but de l'invention est de pouvoir ajuster facilement l'amplitude des contraintes subies par la colle ;
- un autre but de l'invention est d'augmenter la gamme de choix des colles possibles ;
- un autre but de l'invention est de relâcher les contraintes géométriques entre la taille de l'ébauche, de la bague et de la couche de colle ;
- un autre but de l'invention est de réduire ou annuler la sensibilité de l'assemblage aux variations de température.

Conformément à l'invention, au moins un des buts précités peut être atteint par un procédé de façonnage d'un élément optique asphérique comportant les étapes consistant à :
- fixer une ébauche d'élément optique présentant deux surfaces principales et qui sont
   i. une surface optique destinée à être façonnée qui est du côté avant,
   ii. et une surface, dite surface arrière, qui est du côté arrière,
      à une bague ;
- appliquer des efforts et des moments sur la bague pour la déformer de manière contrôlée, et déformer également de manière contrôlée l'ébauche et sa surface optique qui est fixée dessus ;
- façonner par abrasion ladite surface optique déformée, de manière à lui redonner une forme sphérique ou planaire ;
- extraire l'ébauche de la bague, de manière à relâcher les contraintes déformant ladite surface optique façonnée par abrasion pour permettre à cette dernière d'acquérir la forme asphérique souhaitée,
et caractérisé en ce que l'étape de fixation de l'ébauche sur la bague est réalisée en collant une desdites surfaces principales de l'ébauche sur une surface de la bague, qui lui est parallèle et en regard, au moyen d'une couche de colle.

De manière générale, on entend par bague un élément d'un seul tenant permettant de relier des points de fixation à l'ébauche tout en présentant une ouverture permettant un accès à la face arrière de cette dernière.

Selon des modes de réalisation avantageux de l'invention :
- la fixation peut consister à coller une ébauche dont le ou les périmètres des surfaces principales sont différents du périmètre intérieur de la bague, c'est-à-dire que la bague et l'ébauche peuvent ne pas être en conformité stricte pour pouvoir être fixées l'une sur l'autre ;
- les efforts et les moments appliqués à la bague peuvent l'être par des bras qui sont fixés à une surface de la bague qui est perpendiculaire à la couche de colle, c'est-à-dire une surface intérieure ou extérieure de la bague ;
- les efforts et les moments appliqués à la bague peuvent l'être par des bras qui sont fixés à une surface de la bague qui est parallèle à la couche de colle, c'est-à-dire une surface opposée à la couche collée ;
- la fixation de l'ébauche peut se faire sur une bague qui possède un épaulement qui est du côté intérieur de la bague et sur lequel est fixée l'ébauche ;
- la bague peut posséder une protubérance pour recentrer la fibre neutre de la section de la bague ;
- seule la périphérie de l'une des surfaces principales de l'ébauche peut être collée à la bague ;
- la fixation de l'ébauche sur la bague peut faire correspondre leurs axes de symétrie de révolution ;
- la bague peut être dans le même matériau que l'élément optique.

D'autres caractéristiques, détails et avantages de l'invention ressortiront à la lecture de la description faite en référence aux dessins annexés donnés à titre d'exemple et qui représentent, respectivement :
La figure 1, une vue en perspective de la bague et des bras selon l'état de l'art antérieur ;
La figure 2, une vue en coupe de la bague et du bras selon l'état de l'art antérieur ;
La figure 3, une vue en coupe de la surface arrière de l'ébauche collée sur la bague, conformément à l'invention.
La figure 4, une vue en coupe de l'ébauche collée sur la bague ayant un autre ajustement de la largeur de la couche de colle.
La figure 5, une vue en coupe de l'ébauche collée sur la bague, montrant un épaulement, conformément à une réalisation alternative de l'invention.
La figure 6, une vue en coupe de l'ébauche collée sur la bague, montrant une protubérance qui peut recentrer la fibre neutre de la section de la bague, conformément à une autre réalisation alternative de l'invention.
La figure 7, une vue en coupe de l'ébauche collée sur la bague, montrant des bras qui sont fixés sur la surface de la bague opposée à la couche de colle et qui s'étendent vers l'intérieur et vers l'extérieur de la bague, conformément à une autre réalisation alternative de l'invention.

Le procédé de l'invention permet de fabriquer un élément optique asphérique, tel qu'un miroir ou une lentille, à partir d'une ébauche réalisée en un matériau adapté, typiquement un verre ou une céramique.

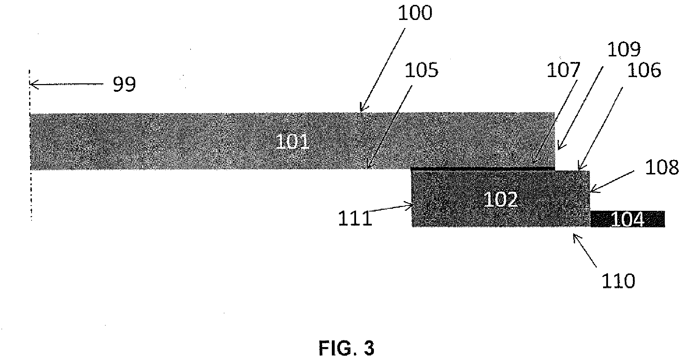

Une méthode de fixation de l'ébauche 101 sur la bague 102 est illustrée dans la figure 3.

L'ébauche 101 de l'élément optique a une forme de plaque et possède deux surfaces principales, grandes devant la surface latérale de la plaque. Une de ces surfaces est la surface optique 100 destinée à être façonnée. L'autre surface est à l'arrière de la plaque. On la désigne par le terme de surface arrière 105.

La bague 102 possède une forme sensiblement proche de celle de l'ébauche : elle entoure l'ébauche. Ainsi, elle a un rapport d'aspect de plaque comparable à celui de la bague.

Les bras 104 sont fixés sur la surface extérieure 108 de la bague. Ils peuvent aussi être fixés sur la surface intérieure 111 de la bague.

Toujours selon le mode de réalisation préféré de l'invention, la face arrière 105 de l'ébauche est fixée sur une surface 106 de la bague qui lui est en regard. Une illustration est montrée dans la figure 3. La droite en pointillé 99 représente l'axe optique de l'ébauche, Il peut être confondu avec un axe de symétrie de révolution de la bague et de l'ébauche. On désignera ce mode de réalisation par fixation « par-dessus » parce que la surface optique est typiquement la face supérieure de l'élément optique, qui donc est lui-même au dessus de la bague. La fixation est réalisée avec une couche de colle 107.

Par comparaison à une méthode de fixation de l'ébauche à l'intérieur 111 de la bague, c'est-à-dire à une fixation de la surface latérale 109 de l'ébauche sur la bague, un avantage immédiat de telles méthodes de fixation est de relâcher les contraintes sur les tolérances de fabrication de l'ébauche, de la bague et de la couche de colle. En effet, selon l'art antérieur divulgué dans le brevet précité, la surface intérieure de la bague est dimensionnée pour être en conformité exacte avec la surface extérieure de l'ébauche et la couche de colle. Compte tenu de la grande taille de ces objets, ce type de tolérance de fabrication est très couteux. L'invention décrite dans ce texte élimine cette exigence.

Ainsi, l'épaisseur de la couche de colle est choisie uniquement en fonction de la contrainte mécanique supportée et éventuellement à l'aide des préconisations du fabricant.

Aussi, l'amplitude des contraintes dans la couche de colle est facilement ajustable par le choix de la largeur de celle-ci. Cet ajustement simple des contraintes à l'intérieur de la colle accroit la précision de réalisation du procédé de façonnage.

Par voie de conséquence, la diminution des contraintes mécaniques dans la couche de colle offre un choix de type de colle plus large parce que nécessitant une résistance mécanique plus faible.

Un autre avantage est que la même bague est utilisée pour plusieurs tailles d'ébauches.

Un autre avantage est que la fixation de l'ébauche sur la bague permet d'obtenir un champ de contraintes dans la couche de colle plus homogène,

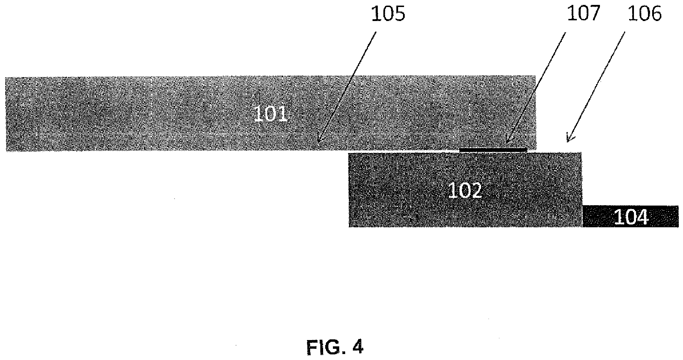

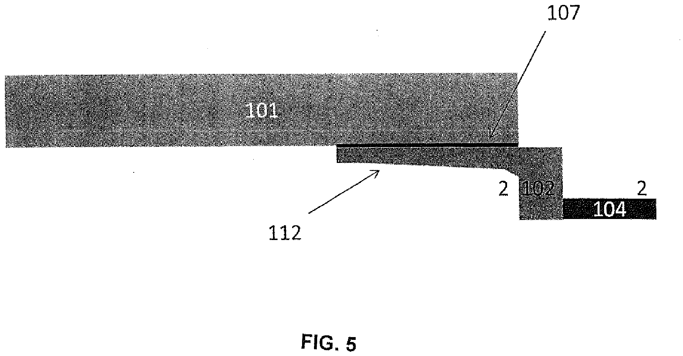

Un mode de réalisation alternatif est montré dans la figure 5. Par comparaison avec la réalisation montrée dans la figure 4, la bague est allégée par suppression de matière et présente donc un épaulement 112 qui est du côté intérieur de la bague et sur lequel est fixé l'ébauche 101. Une telle réalisation minimise les contraintes dans le joint de colle.

Selon un mode de réalisation préféré de l'invention, les matériaux de la bague et de l'ébauche sont identiques pour éviter les déformations parasites et les contraintes dans la colle induites par des variations de température.

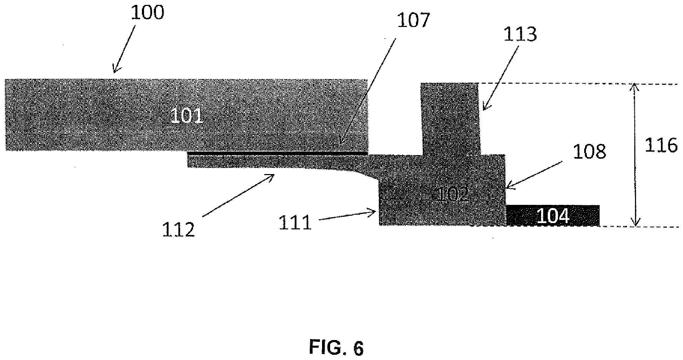

Un autre mode de réalisation est montré dans la figure 6. La bague est pourvue d'une protubérance 113 sur sa périphérie qui tend à recentrer la position de la fibre neutre de la bague vers celle de l'ébauche optique, diminuant les contraintes de collage et limitant la déformation thermique de la face 100 si les coefficients de dilatation des matériaux de l'ébauche 101 et de la bague 102 sont différents. En outre, la protubérance 113 :
- permet de conserver à l'ensemble collé (ébauche plus bague) un centre d'inertie situé à l'intérieur de l'ébauche et à proximité de la face optique, ce qui à son tour permet d'effectuer le façonnage par abrasion avec ladite face optique orientée vers le haut ou vers le base ;
- aide au positionnement de l'ébauche par rapport à la bague, fournissant un guidage latéral.

Cette protubérance est caractérisée en ce qu'elle tend à augmenter l'épaisseur 116 de la section de la bague à proximité de la surface extérieure 108 (par rapport à la surface intérieure 111), c'est-à-dire à sa périphérie.

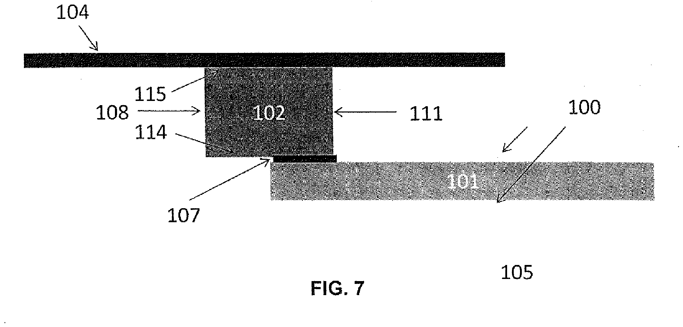

Un autre mode de réalisation est montré dans la figure 7. Les bras 104 sont liés à la bague non plus par la surface cylindrique intérieure 111 ou extérieure 108 mais par la face plane opposée 115 à la face collée 114 par la couche de colle 107, s'étendant de manière symétrique vers l'extérieur et l'intérieur de la bague. Cette solution réduit l'encombrement extérieur de l'ensemble sans masquer la face arrière de l'ébauche comme le feraient les bras s'ils étaient uniquement placés vers l'intérieur.

Dans tous les cas, il est également possible d'appliquer une pression (uniforme ou pas) sur la surface arrière de l'ébauche, en contre-réaction sur la bague, pour induire une déformation supplémentaire permettant notamment de corriger l'aberration sphérique.

## Revendications

1. Procédé de façonnage d'un élément optique asphérique comprenant les étapes consistant à:
fixer une ébauche (101) d'élément optique présentant deux surfaces principales (100, 105) qui sont :
une surface optique (100) destinée à être façonnée qui est du côté avant,
et une surface dite surface arrière (105) qui est du côté arrière,
à une bague (102) ;
appliquer des efforts et des moments à la bague (102) pour la déformer de manière contrôlée, et déformer également de manière contrôlée l'ébauche (101) et sa surface optique qui est fixé dessus ;
façonner par abrasion ladite surface optique déformée, de manière à lui redonner une forme sphérique ou planaire ;
extraire l'ébauche (101) de la bague (102), de manière à relâcher les contraintes déformant ladite surface optique façonnée par abrasion pour permettre à cette dernière d'acquérir la forme asphérique souhaitée,
et **caractérisé en ce que** l'étape de fixation de l'ébauche sur la bague est réalisée en collant une desdites surfaces principales de l'ébauche sur une surface de la bague (102), qui lui est parallèle et en regard, au moyen d'une couche de colle (107).

2. Procédé selon la revendication 1 dans lequel l'étape de fixation comprend le collage d'une ébauche dont le ou les périmètres des surfaces principales sont différents du périmètre intérieur de la bague.

3. Procédé selon une des revendications précédentes dans lequel les efforts et moments appliqués à la bague (102) sont appliqués par des bras (104) qui sont fixés à une surface comprise dans une pluralité de surfaces (108, 111) de la bague (102) qui sont perpendiculaires à la couche de colle (107).

4. Procédé selon une des revendications 1 ou 2 dans lequel les efforts et les moments appliqués à la bague (102) sont appliqués par des bras (104) qui sont fixés à une surface (115) de la bague qui est parallèle à la couche de colle (107).

5. Procédé selon une des revendications précédentes dans lequel la fixation de l'ébauche se fait sur une bague qui possède un épaulement (112) qui est du côté intérieur (111) de la bague et sur lequel est fixée l'ébauche (101).

6. Procédé selon une des revendications précédentes dans lequel la bague possède une protubérance (113) sur sa périphérie pour recentrer la position de la fibre neutre de la bague vers celle de l'ébauche.

7. Procédé selon une des revendications précédentes dans lequel seule la périphérie de l'une des surfaces principales de l'ébauche est collée à la bague.

8. Procédé selon une des revendications précédentes dans lequel la fixation de l'ébauche sur la bague fait correspondre leurs axes de symétrie de révolution (99).

9. Procédé selon une des revendications précédentes dans lequel la bague (102) est dans le même matériau que l'ébauche (101).

## Patentansprüche

1. Bearbeitungsverfahren eines asphärischen optischen Elements, das die folgenden Schritte umfasst:
Befestigen eines Rohlings (101) eines optischen Elements, das zwei Hauptoberflächen (100,105) aufweist, welche Folgende sind:
eine optische Oberfläche (100), die dazu bestimmt ist, bearbeitet zu werden, die sich auf der Vorderseite befindet,
und eine Oberfläche, die hintere Oberfläche (105) genannt wird, die sich auf der Rückseite befindet,
an einem Ring (102);
Aufbringen von Kräften und Momenten auf den Ring (102), um ihn kontrolliert zu verformen, und auch kontrolliertes Verformen des Rohlings (101) und seiner optischen Oberfläche, die darauf befestigt ist;
Bearbeiten der verformten optischen Oberfläche durch Abrieb, um sie wieder in eine sphärische oder ebene Form zu bringen;
Extrahieren des Rohlings (101) aus dem Ring (102), um die Spannungen zu lösen, welche die durch Abrieb bearbeitete optische Oberfläche verformen, um es letzterer zu ermöglichen, die gewünschte asphärische Form zu erhalten,
und **dadurch gekennzeichnet, dass** der Schritt der Befestigung des Rohlings auf dem Ring ausgeführt wird, indem eine der Hauptoberflächen des Rohlings mittels einer Klebeschicht (107) auf eine Oberfläche des Rings (102) geklebt wird, die zu diesem parallel und ihm gegenüberliegend ist.

2. Verfahren nach Anspruch 1, wobei der Schritt der Befestigung das Kleben eines Rohlings umfasst, dessen Umfang oder Umfänge der Hauptoberflächen sich von dem inneren Umfang des Rings unterscheiden.

3. Verfahren nach einem der vorstehenden Ansprüche, wobei die auf den Ring (102) aufgebrachten Kräfte und Momente durch Arme (104) aufgebracht werden, die an einer Oberfläche befestigt sind, die innerhalb einer Mehrzahl von Oberflächen (108,1 11) des Rings (102) enthalten ist, die senkrecht zu der Klebeschicht (107) verlaufen.

4. Verfahren nach einem der Ansprüche 1 oder 2, wobei die auf den Ring (102) aufgebrachten Kräfte und Momente durch Arme (104) aufgebracht werden, die an einer Oberfläche (115) des Rings befestigt sind, die parallel zur Klebeschicht (107) verläuft.

5. Verfahren nach einem der vorstehenden Ansprüche, wobei die Befestigung des Rohlings auf einem Ring erfolgt, der eine Schulter (112) aufweist, die sich auf der Innenseite (111) des Rings befindet und auf welcher der Rohling (101) befestigt ist.

6. Verfahren nach einem der vorstehenden Ansprüche, wobei der Ring auf seinem Umfang einen Vorsprung (113) aufweist, um die Stellung der neutralen Faser des Rings zu derjenigen des Rohlings neu zu zentrieren.

7. Verfahren nach einem der vorstehenden Ansprüche, wobei nur der Umfang einer der Hauptoberflächen des Rohlings an den Ring geklebt wird.

8. Verfahren nach einem der vorstehenden Ansprüche, wobei die Befestigung des Rohlings auf dem Ring deren Rotationssymmetrieachsen (99) übereinstimmen lässt.

9. Verfahren nach einem der vorstehenden Ansprüche, wobei der Ring (102) aus dem gleichen Material wie der Rohling (101) besteht.

## Claims

1. Method for fashioning an aspherical optical element, comprising the steps consisting of:
fixing an optical-element blank (101) having two main surfaces (100, 105) that are:
an optical surface (100) intended to be fashioned, which is on the front side,
and a surface referred to as the rear surface (105), which is on the rear side,
to a ring (102);
applying forces and moments to the ring (102) in order to deform it in a controlled manner, and to deform, also in a controlled manner, the blank (101) and its optical surface which is fixed thereon;
fashioning said deformed optical surface by abrasion, so as to give it a spherical or planar form once again;
extracting the blank (101) from the ring (102), so as to release the stresses deforming said optical surface fashioned by abrasion so as to allow the latter to acquire the required aspherical form,
and **characterised in that** the step of fixing the blank on the ring is carried out by adhesively bonding one of said main surfaces of the blank on a surface of the ring (102), which is parallel to it and facing it, by means of a layer of glue (107).

2. Method according to claim 1, in which the fixing step comprises the adhesive bonding of a blank, the perimeter or perimeters of the main surfaces of which are different from the internal perimeter of the ring.

3. Method according to either of the preceding claims, in which the forces and moments applied to the ring (102) are applied by arms (104) that are fixed to a surface included in a plurality of surfaces (108, 111) of the ring (102) that are perpendicular to the layer of glue (107).

4. Method according to either claim 1 or claim 2, in which the forces and moments applied to the ring (102) are applied by arms (104) that are fixed to a surface (115) of the ring that is parallel to the layer of glue (107).

5. Method according to any of the preceding claims, in which the blank is fixed to a ring that has a shoulder (112) that is on the interior side (111) of the ring and to which the blank (101) is fixed.

6. Method according to any of the preceding claims, in which the ring has a protuberance (113) on its periphery for realigning the position of the neutral fibre of the ring to that of the blank.

7. Method according to any of the preceding claims, in which only the periphery of one of the main surfaces of the blank is bonded to the ring.

8. Method according to any of the preceding claims, in which the fixing of the blank on the ring makes their axes of symmetry of revolution (99) correspond.

9. Method according to any of the preceding claims, in which the ring (102) is made from the same material as the blank (101).
